# EUROPEAN PATENT APPLICATION

(11) **EP 2 881 781 A1**
(43) Date of publication of application: **10.06.2015**
(21) Application number: 13825307.5
(22) Date of filing: 24.06.2013
(51) Int. Cl.: G02F 1/1333, G09F 9/35

(54) **METHOD FOR MANUFACTURING MIDDLE CABINET FOR DISPLAY**

(30) Priority: 31.07.2012 KR 20120083610
(71) Applicant: SKW Co., Ltd., Chilgok-gun, Gyeongsangbuk-do 718-814 (KR)
(72) Inventor: JUNG, Won-Ki, Seoul 135-536 (KR)
(74) Representative: Von Kreisler Selting Werner - Partnerschaft von Patentanwälten und Rechtsanwälten mbB
(86) International application number: PCT/KR2013/005564
(87) International publication number: WO 2014/021555

(57) **Abstract**

According to one embodiment of the present invention, a method for manufacturing a middle cabinet for a display includes: a plastic molded object extrusion step; a film lamination and sizing step; a cooling step; a drawing step; a shear-processing step; and a thermal bending step. According to the present invention, the middle cabinet for a display can be formed with a thickness and width enabling the latter to be thin, and even when the display size varies, molds matching each of the sizes do not have to be additionally manufactured. Accordingly, the middle cabinet for a display can be manufactured through bending molding so as to match each of the display sizes such that manufacturing time and costs can be reduced, and various metallic colors can be freely implemented.

## Description

### [Technical field]

The present application relates to a method for manufacturing an intermediate cabinet of a display using an extrusion-forming process, and more particular, a method for manufacturing an intermediate cabinet of a display, which can reduce a thickness and a width of the intermediate cabinet of a display to reduce a weight thereof, which can produce easily the intermediate cabinet having a dimension corresponding to each of various dimensions of the display to save the production const, and which can freely realize a luxury color, such as metallic surface having various colors, a surface of the product.

### [Background]

In general, a display device such as a LDC TV includes an external case provided for receiving and protecting an output panel such as a LCD panel, and the external case is composed of a bezel, an intermediate cabinet and a rear cover mounted thereto.

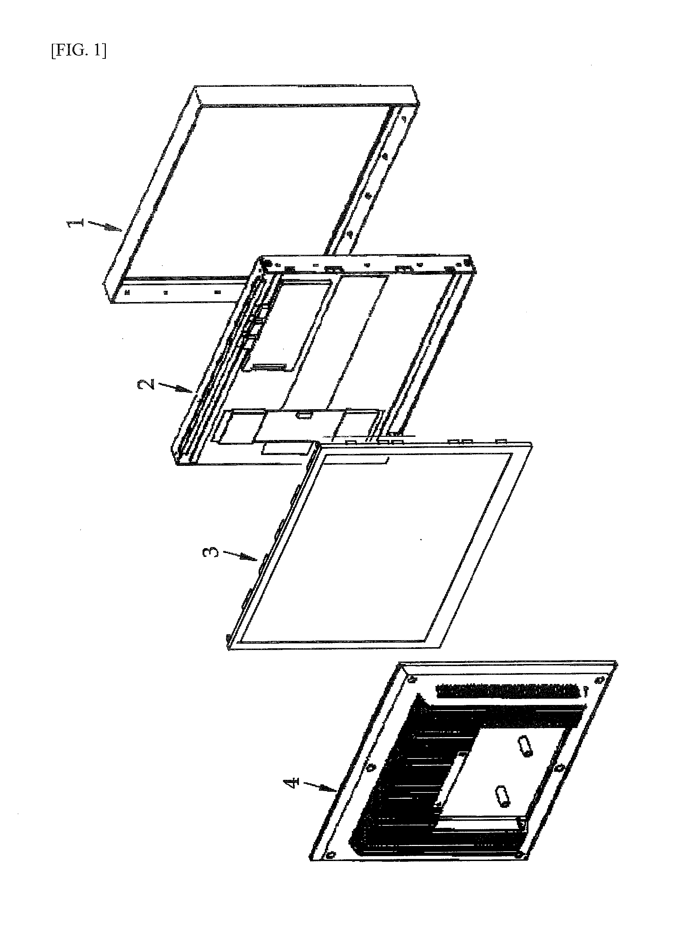

FIG. 1 shows an external case of a LCD TV as described above. Here, a bezel 1 is a case forming an edge portion on a front surface of a LCD panel 2, an intermediate cabinet 3 is provided for receiving and fixing the LCD panel 2 between the bezel and a rear cover 4, and the rear cover 4 is provided for covering a rear side of an output panel to protect a rear surface of the output panel.

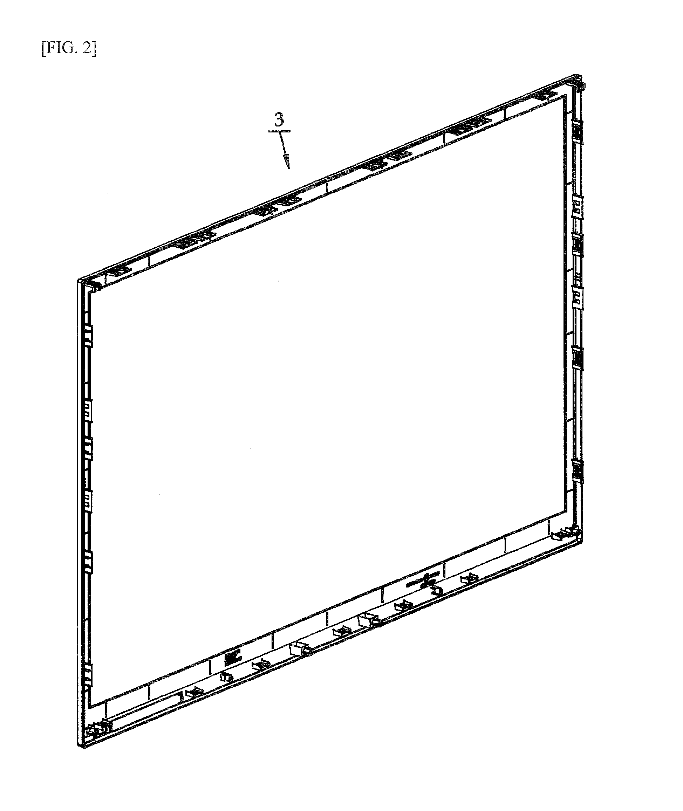

As shown in FIG. 2, the intermediate cabinet 3 in the conventional LCD panel external case as described above is manufactured by injection-molding a plastic resin. However, if a size of the LCD panel 2 is modified, an injection-mould should be separately manufactured and an injection-molding process is performed using the above injection-mould to manufacture the intermediate cabinet 3 having a size which is the same as the modified size of the panel. In addition, due to a characteristic of the injection-molding process, it is impossible to reduce a thickness or a width of the intermediate cabinet 3 beyond a predetermined range so that the intermediate cabinet becomes heavier and a lot of material is consumed. Also, in order to realize a metallic color on an outer surface of the injection-molded product, a separate deco should be manufactured and attached to the outer surface of the injection-molded product after a plating or hot stamping process. As a result, the manufacturing process is complicated, an overall manufacturing cost is increased and it is difficult to realize various colors. In particular, the above problems have caused the major disturbance in the current product development tendency for seeking an enlargement, slimness and weight-lightening of the display such as LCD TV.

### [Brief description of the invention]

### [Technical task]

The present invention is invented to solve the above problems, an object of the present invention is to provide a method for manufacturing an intermediate cabinet of a display, which can reduce a thickness and a width of an intermediate cabinet of a display to achieve a slimness and weight-lightening of the display, which can produce the intermediate cabinet without manufacturing separately a mould having a dimension corresponding to a dimension of the display even though a dimension of the display is variously modified, and which can freely realize a luxury color on a surface of the product, such as a metallic surface with various colors.

### [Technical solution]

A method for manufacturing an intermediate cabinet of a display according to one embodiment of the present invention includes a molded plastic body extruding process, a film laminating and sizing process, a cooling process, a drawing process, a shearing process and a heat-bending process.

In the method for manufacturing an intermediate cabinet of a display according to one embodiment of the present invention, the molded plastic body extruding process causes raw plastic to enter a heating cylinder to be heated by a heating heater, causes the melted plastic to be conveyed by a rotating screw and causes molted plastic body having a predetermined cross-sectional shape to be extruded through a first mould.

In the method for manufacturing an intermediate cabinet of a display according to one embodiment of the present invention, the film laminating and sizing process laminates a PET film supplied from a film supplying unit on the molded plastic body extruded in the molded plastic body extruding process and causes the molded plastic body to have a final cross-sectional shape.

In the method for manufacturing an intermediate cabinet of a display according to one embodiment of the present invention, the cooling process cools the molded plastic body, which has the film laminated thereon in the film laminating and sizing process and the final cross-sectional shape, with cooling water.

In the method for manufacturing an intermediate cabinet of a display according to one embodiment of the present invention, the drawing process draws the molded plastic body, which is cooled in the cooling process, by means of a rotating roller.

In the method for manufacturing an intermediate cabinet of a display according to one embodiment of the present invention, the shearing process cuts the molded plastic body passing through the cooling process into a predetermined length and forms a screw hole, a notch and both end cutting portions having a predetermined size.

In the method for manufacturing an intermediate cabinet of a display according to one embodiment of the present invention, the heat-bending process heats the molded plastic body passing through the shearing process with an air heater and bends it to allow the molded plastic body to have a general rectangular shape.

The characteristics and advantages of the present invention will be more clear by the below description made on the basis of the accompanying drawings.

Prior to this, the terms or words utilized in the detail description and claims should not be interpreted as a conventional and dictionary definition, but should be interpreted as a definition and concept corresponding to a technical spirit of the present invention on the basis of the principle that the inventor can properly define a concept of terminology for illustrating own invention in the best manner.

### [Advantageous effect]

In the method for manufacturing the intermediate cabinet of the display according to the present invention, since the intermediate cabinet is produced by extrusion-molding a plastic material, a thickness and width of the intermediate cabinet of the display can become thin so that it is possible to reduce a weight and a thickness of the display.

In the method for manufacturing the intermediate cabinet of the display according to the present invention, since the long-bar shaped molded plastic body formed by the extrusion-molding process is bent to form the intermediate cabinet of the display, although a dimension of the display is variously modified, unlike a method employing an injection-molding process, there is no need to separately manufacture a mould having a dimension corresponding to a dimension of the display, and the intermediate cabinet of the display which fits in a dimension of the display can be manufactured by merely bending the molded plastic body to significantly reduce a production time and cost.

In the method for manufacturing the intermediate cabinet of the display according to the present invention, since the film is laminated on the surface of the molded plastic body which is extrusion-molded, to realize a color of the intermediate cabinet of the display, it is possible to manufacture the intermediate cabinet of the display, which has a luxury color such as a metallic surface with various colors.

### [Brief description of the drawings]

FIG. 1 is an exploded perspective view of a conventional LCD display;
FIG. 2 is a perspective view of an intermediate cabinet of a LCD display manufactured by a conventional injection-molding method;
FIG. 3 is a flow chart for illustrating each step of a method for manufacturing an intermediate cabinet according to the present invention;
FIG. 4 is a schematic view for illustrating a process for forming a molded plastic body used for manufacturing an intermediate cabinet according to the present invention;
FIG. 5a, FIG. 5b, FIG. 5c and FIG. 5d are cross-sectional views taken along the lines A-A, B-B, C-C of a second mould and D-D of a molded plastic body passing through a second mould in shown in FIG. 4, respectively;
FIG. 6 is a schematic view for illustrating a process for drawing a molded plastic body according to the present invention;
FIG. 7a is a schematic view for illustrating a process for cutting a molded plastic body in a shearing process according to the present invention and FIG. 7b is a perspective view showing a molded plastic body which is cut;
FIG. 8a is a schematic view for illustrating a process for forming a screw hole, a notch and an end cutting portion in a shearing process according to the present invention;
FIG. 8b is a perspective view of a molded plastic body manufactured through a shearing process shown in FIG. 8a;
FIG. 9a and FIG. 9b are schematic views for illustrating a heat-bending process performed for manufacturing an intermediate cabinet according to the present invention;
FIG. 10 is a perspective view of an intermediate cabinet manufactured by the present invention; and
FIG. 11 is a front view showing that a corner reinforcing member is installed on a rear surface of an intermediate cabinet manufactured by the present invention.

### [Best mode for carrying out the invention]

The objects, the specific advantages and the novel characteristics of the present invention will be more apparent from the below description and the preferred embodiment relevant to the accompanying drawings. It should be noted that, with regard to the reference numerals for the structural elements in the drawings, the same structural elements which are shown in different drawings will be indicated by the same reference numeral.

In addition, the terms of "first" and "second" may be employed for illustrating various structural elements, but the above structural elements should not be limited by the above terms. The above terms will be used only for distinguishing one element from another structural element. In the description of the present invention, in addition, if the detail description on a known technology related to the present invention may unnecessarily obscure the gist of the present invention, the description thereon is omitted.

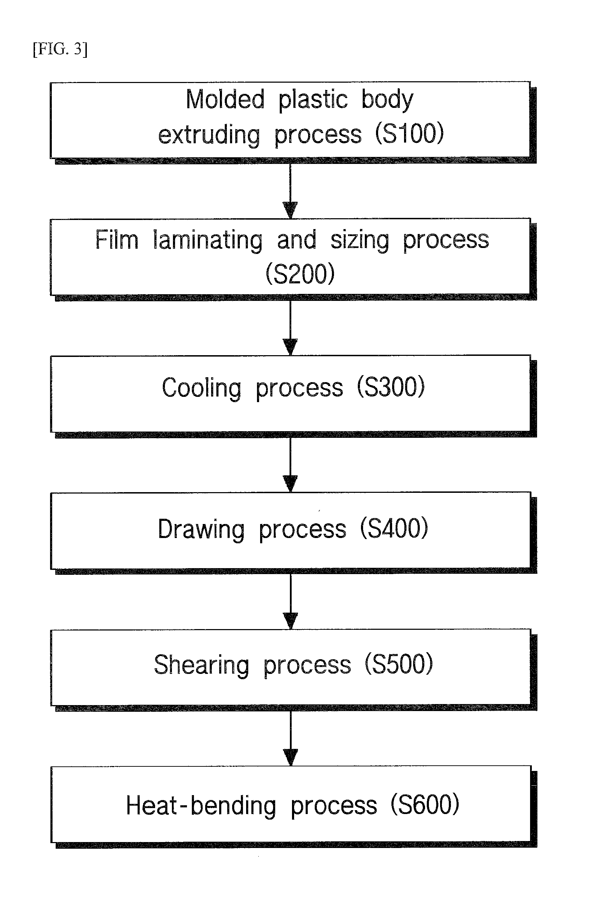

Hereinafter, the preferred embodiment of the present application is described in detail with reference to the accompanying drawings. FIG. 3 is a flow chart for illustrating each step of a method for manufacturing an intermediate cabinet according to the present invention.

A method for manufacturing an intermediate cabinet according to the present invention is illustrated with reference to the above drawing. The intermediate cabinet of a display is manufactured through a molded plastic body extruding process S100 → a film laminating and sizing process S200 → a cooling process S300 → a drawing process S400 → a shearing process S500 → a heat-bending process S600, which constitute the method according to the present invention.

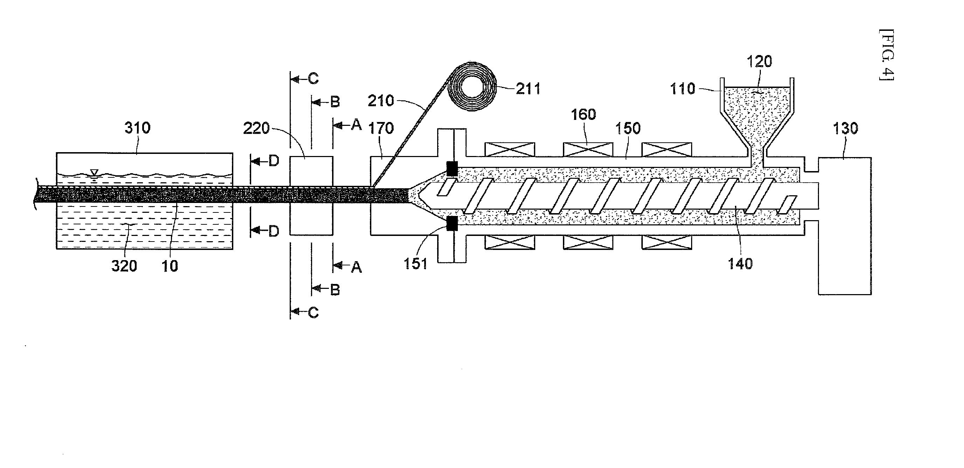

A process for manufacturing the intermediate cabinet of the display according to the present invention is described with reference to FIG. 4 to FIG. 6.

First of all, in the molded plastic body extruding process S100, as shown in FIG. 4, plastic molding material 120 is put into a heating cylinder 150 through a hopper 120. In order to make the plastic molding material 120 in the heating cylinder 150 have a flowability which is required in the extruding process, the heating cylinder 150 is then heated by a heating heater 160 to melt the plastic molding material 120

Plastic resin such as acrylonitrile butadiene styrene (ABS), polycarbonate (PC) and the like is employed as the plastic molding material 120. Here, ABS resin is one kind of thermoplastic resin having the impact resistance and PC resin is the resin having the impact resistance and the heat resistance.

A rotary screw 140 is mounted in the heating cylinder 150 and the rotary screw 140 is rotated by a rotational device 130. The plastic molding material 120, which is heat-melted and liquefied in the heating cylinder 150 heated by the heating heater 160, is conveyed toward a first mould by a rotation of the rotary screw 140. A plastic molded body 10 is then extruded from the first mould 170.

A motor and a reduction gear, which are not shown in the drawing, are mounted in the rotational device 130, and a rotational velocity of the rotational device 130 is controlled to enable the rotary screw 140 to be rotated at a constant speed.

In addition, a blocking plate 151 is provided to an end of the heating cylinder 150, which corresponds to the first mould, to prevent the plastic molding material 120, which is heat-melted and conveyed toward the first mould, from flowing backward to the heating cylinder 150.

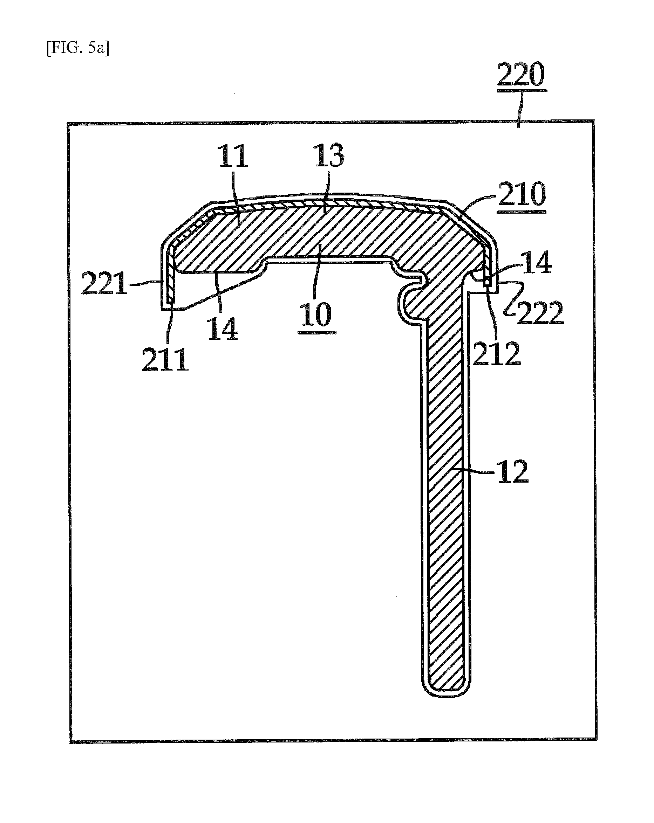

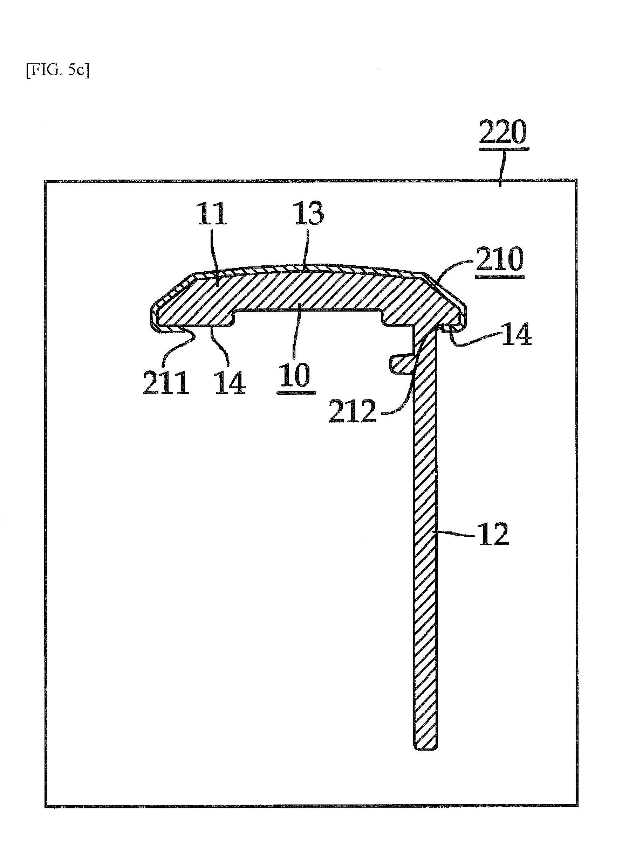

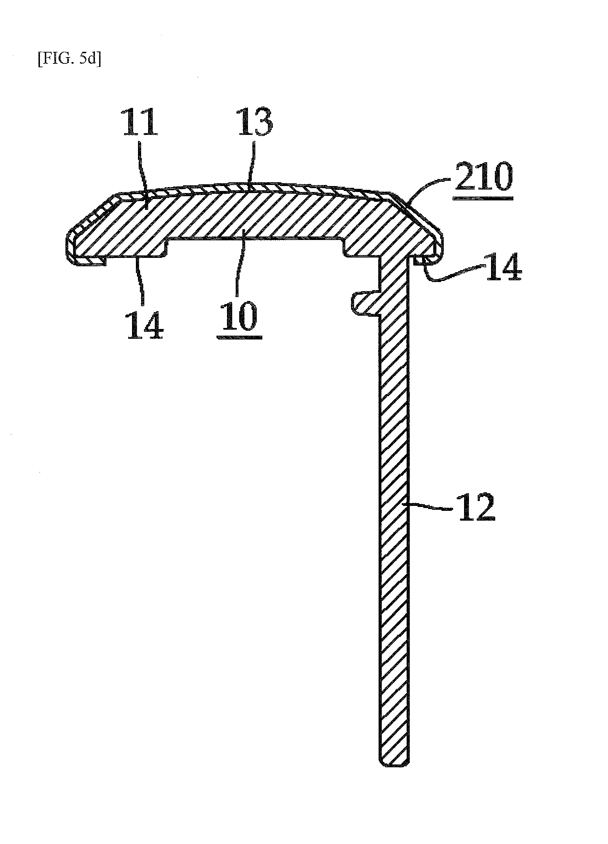

Next, the film laminating and sizing process S200 is described with reference to FIG. 4 and FIG. 5a to FIG. 5d. At the end of the first mould 170 through which the plastic molded body 10 is extruded, a PET film 210 supplied from a film supplying unit 211 is attached to an upper portion of the plastic molded body 10.

And, the molded plastic body 10 on which the PET film 210 is attached is conveyed to a second mould 220 located at a rear side of the first mould 170. While the molded plastic body 10 passes through the second mould 220, a sizing process is carried out for the molded plastic body to change a cross-sectional shape into a final cross-sectional shape so that a size and a shape of the molded plastic body is standardized. Simultaneously, the PET film 210 is completely laminated on the molded plastic body 10.

In other words, an overall cross-sectional dimension and a curvature of each protruded portion of the molded plastic body 10 extruded through the first mould 170 in the in the molded plastic body extruding process S100 are somewhat greater than those of the molded plastic body 10 drawn from an outlet of the second mould 220. However, whiling passing the second mould 220 as described above, a cross-sectional dimension and a curvature of the molded plastic body 10 extruded through the first mould 170 are gradually reduced so that the cross-sectional shape of the molded plastic body is changed into the final cross-sectional shape.

In addition, although the PET film 210 is attached to an upper surface 13 of a head part 11 of the molded plastic body 10 at an end of the first mould 170 as shown in FIG. 5a to FIG. 5c, the molded plastic body 10 is conveyed to an inlet (line A-A) of the second mould 220 in the state in which both side portions 211 and 212 of the PET film 210 are not completely attached to lower surfaces 14 of both side end portions of the head part 11 of the molded plastic body 10, respectively.

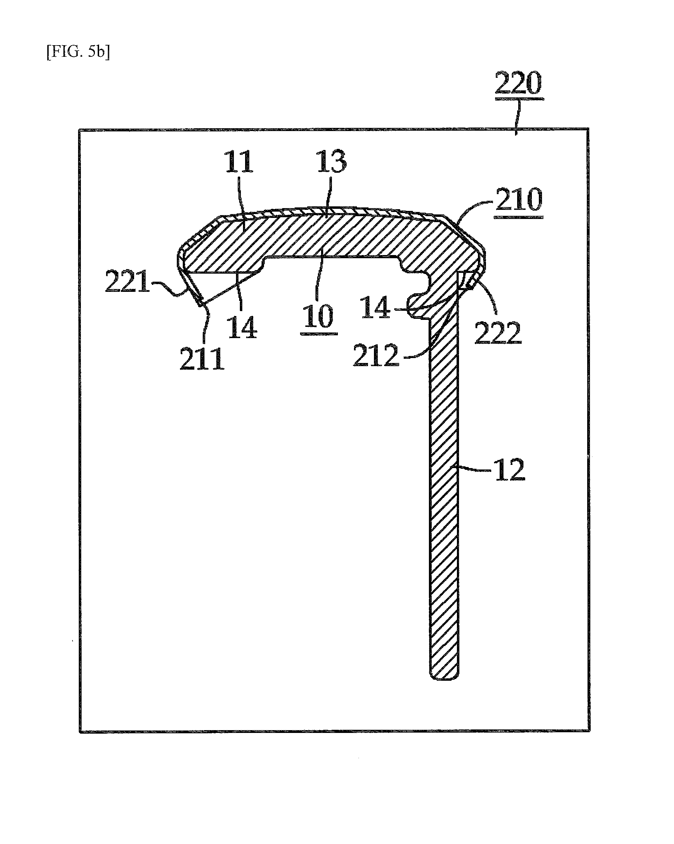

At the inlet (line A-A) of the second mould 220, both side end portions 211 and 212 of the PET film 210 are not attached to the lower surfaces 14 of both side end portions of the head part 11 of the molded plastic body 10, but are spaced apart from them and vertically directed downward (see FIG. 5a). However, a left side surface 211 and a right side surface 222 of an upper portion of the second mould 220, which face outer surfaces of both side end portions 211 and 212 of the PET film 210, are gradually folded toward a central portion and are approached to the lower surfaces 14 of both side end portions of the head part 11 of the molded plastic body 10 (see FIG. 5b). At the outlet (line C-C) of the second mould 220, the left side surface 211 and the right side surface 222 of the upper portion of the second mould 220 are in contact with to the lower surfaces 14 of both side end portions of the head part 11 of the molded plastic body. At this time, each of the end portions 211 and 212 of the PET film 210 is interposed between the lower surface of the molded plastic body and each of the side surfaces 211 and 222 of the second mould 220.

Due to the above structure of the second mould, while the molded plastic body 10 gradually enters the second mould 220, both end portions 211 and 212 of the PET film 210 are bent toward the lower surface 14 of both side end portions of the head part 11 of the molded plastic body 10 by the left side surface 211 and the right side surface 222 of the upper portion of the second mould 220, and at the outlet (line C-C) of the second mould 220, the left side surface 211 and the right side surface 222 of the upper portion of the second mould 220 are in contact with to the lower surfaces 14 of both side end portions of the head part 11 of the molded plastic body 10. At this time, each of the end portions 211 and 212 of the PET film 210 is interposed between the lower surface of the molded plastic body and each of the side surfaces 211 and 222 of the second mould 220.

Therefore, as the molded plastic body 10 gradually enters the second mould 220, both end portions 211 and 212 of the PET film 210, which are not attached to the lower surface 14 of both side end portions of the head part 11 of the molded plastic body 10 and are vertically directed downward at the inlet of the second mould 220, are bent toward the lower surface 14 of both side end portions of the head part 11 of the molded plastic body 10 by the left side surface 211 and the right side surface 222 of the upper portion of the second mould 220. Finally, both end portions of the PET film are completely attached on the lower surface 14 of both side end portions of the head part 11 of the molded plastic body at a periphery region of the outlet of the second mould.

After the film laminating and sizing process S200 in which the PET film 210 is laminated on the molded plastic body 10 and the shape of the molded plastic body is changed into the final cross-sectional shape, in the subsequent cooling process 300, the molded plastic body 10 passes through a cooling water tank 310 and is then cooled by cooling water 320 in the cooling water tank 310 as shown in FIG. 4 so that the molded plastic body 10 is hardened.

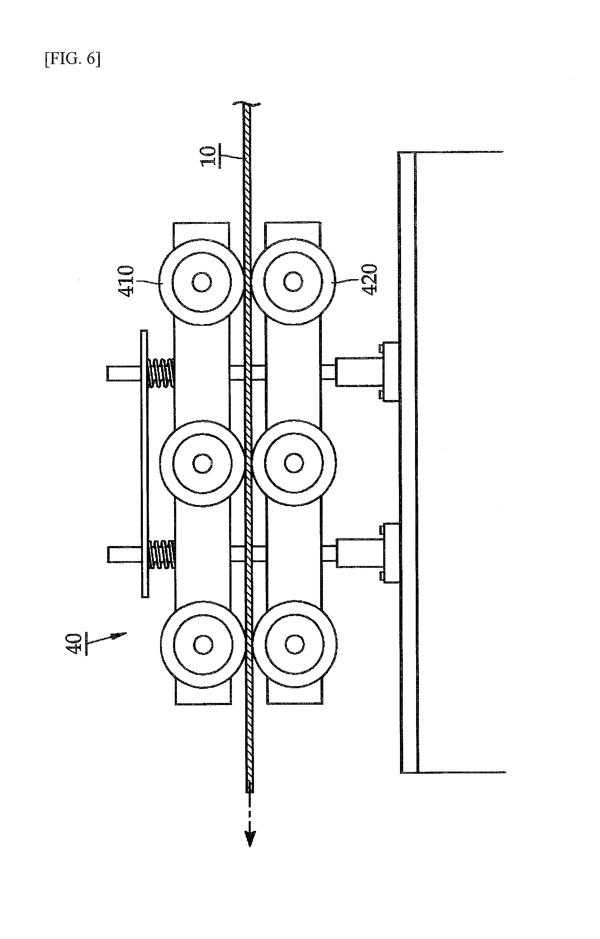

In addition, the drawing process 400 is the process in which the molded plastic body 10 hardened in the cooling process is pulled with a constant force as shown in FIG. 6 to enable the molded plastic body 10 to be smoothly drawn from the second mould 220. In the embodiment of the present invention, as shown in FIG. 6, the molded plastic body 10 is inserted between upper and lower rollers 410 and 420 which are being rotated, and is then pulled in the horizontal direction by a rotational friction force of the upper and lower rollers 410 and 420 to enable the molded plastic body 10 to smoothly pass through the second mould 220 and to be drawn. At this time, the speed at which the molded plastic body 10 is drawn from the second mould 220 is so properly controlled that the molded plastic body 10 extruded from the first mould 170 is not stagnated between the first mould 170 and the second mould 220.

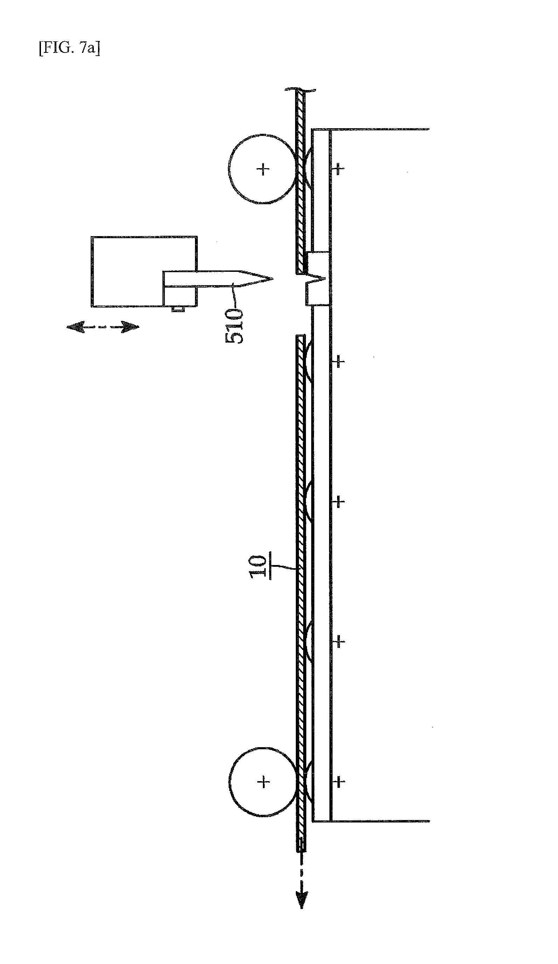

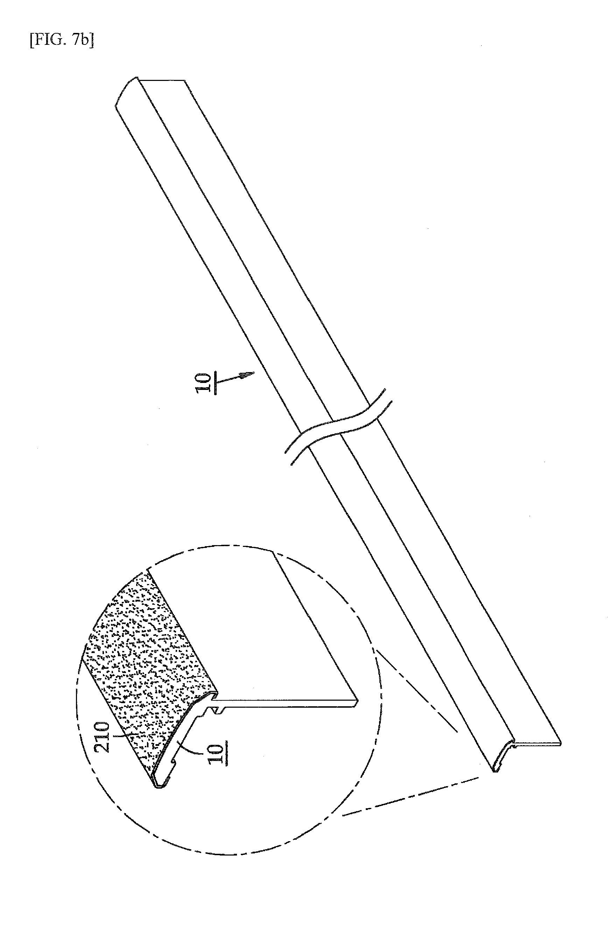

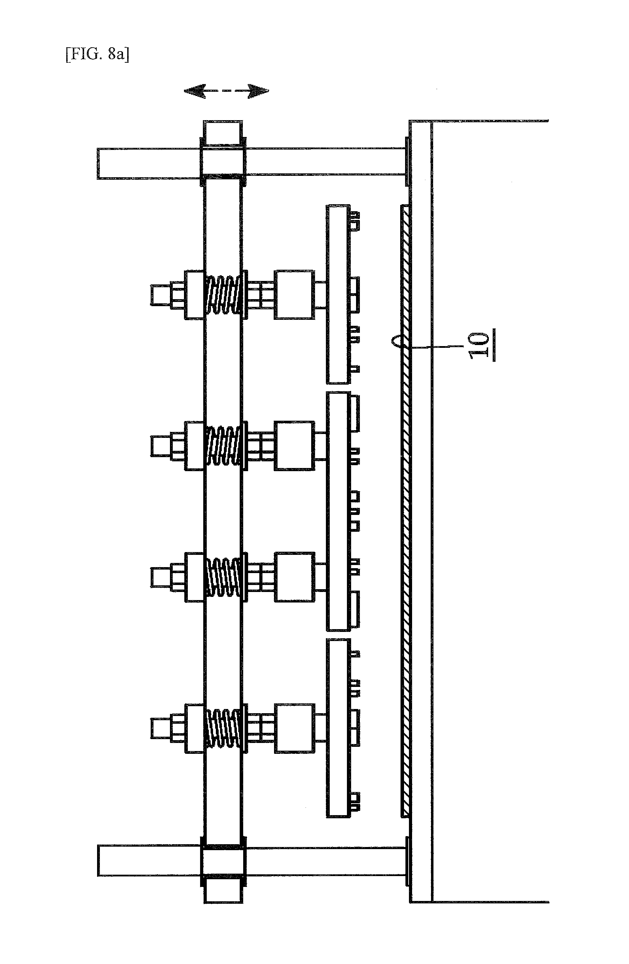

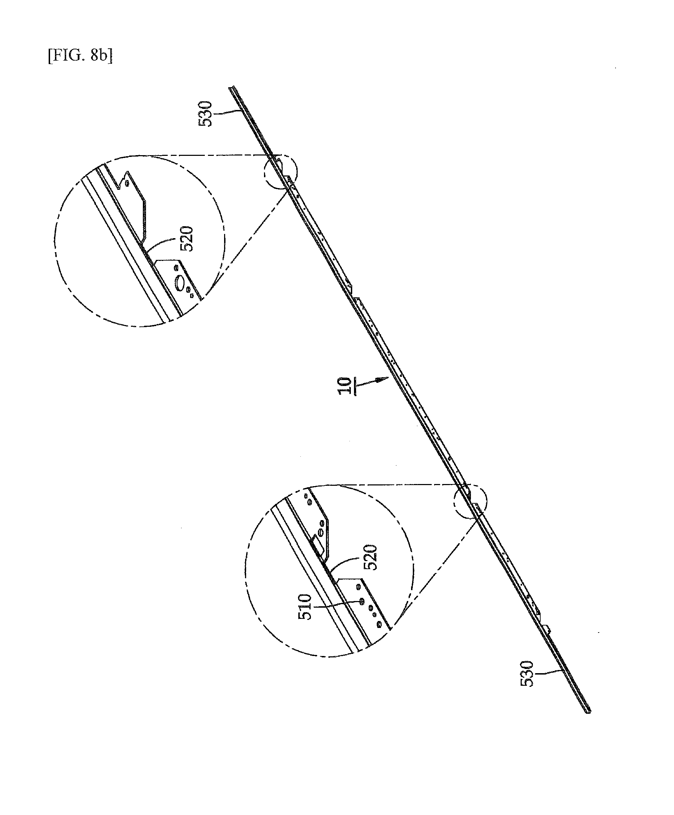

As shown in FIG. 7a, FIG. 7b, FIG. 8a and FIG. 8b, the shearing process 500 is subsequently performed by a press. In the shearing process, the molded plastic body 10 drawn in the drawing process is cut into a predetermined length and a screw hole 510 is formed on a leg portion 12 of the molded plastic body 10.

In addition, in order to enable the molded plastic body 10 to be smoothly bent in the heat-bending process 600 which will be carried out after the shearing process S500, a notch 520 is formed on a predetermined bending region of the leg portion 12 of the molded plastic body 10.

Also, the leg portions 12 of both end portions of the molded plastic body 10 are cut by a predetermined length to form end cutting portions 530.

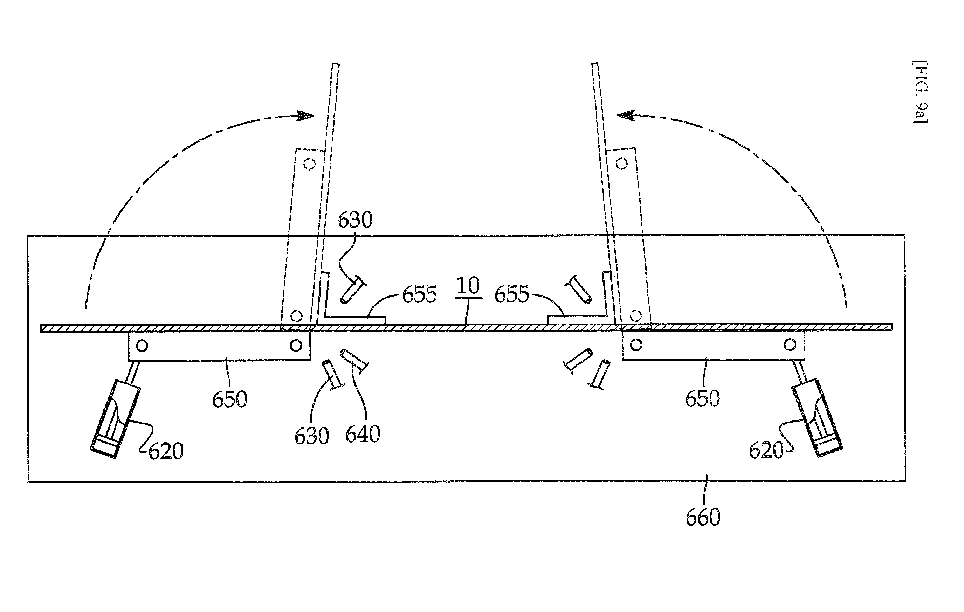

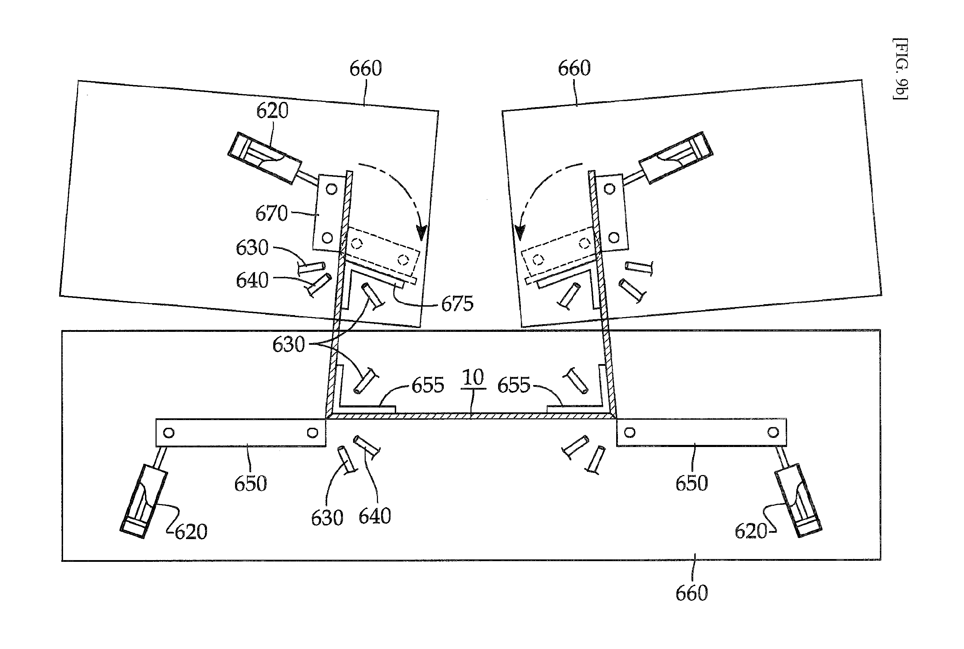

The subsequent heat-bending process 600 is the process for bending the molded plastic body 10 as shown in FIG. 9a and FIG. 9b to enable the molded plastic body 10 machined in the shearing process 500 to have a general rectangular shape.

The heat-bending process 600 is concretely described with reference to FIG. 9a and FIG. 9b. The heat-bending process 600 is divided into a first bending process and a second bending process, the first bending process is performed on a front base plate 610 as shown in FIG. 9a.

First of all, the molded plastic body 10 machined in the shearing process 500 is fixed between a front operating jig 650 and a front fixing jig 655 which are provided at each of both sides of the front base plate 610. Here, the molded plastic body is placed such that a region around the notch 520 formed on the molded plastic body 10 can be bent when the front operating jig 650 is rotated. In this state, a bending region of the molded plastic body 10, that is, the region in which the notch 520 is formed is heated by an air heater 630 for a predetermined time.

Once the heating procedure is completed, the front operating jig 650 is rotated approximately 95° to 105° by means of a hydraulic cylinder 620 to bend the molded plastic body 10. Here, the bending angle of the molded plastic body 10, which is larger than 90°, is determined in the light of the fact that the bending region is restored certain angles in the direction opposite to the bending direction, due to a spring back phenomenon after the bending process, and the above bending angle may be suitably adjusted according to material of the molded plastic body 10 and a heating temperature in the heat-bending process.

In addition, although the hydraulic cylinder 620 is employed as the means for operating the front operating jig 650 in this embodiment, another operating means such as a servo motor may be used instead of the hydraulic cylinder 620.

Once the bending process as described above is completed, the bending region of the molded plastic body 10 is heated again for a few seconds by the air heater 630 and is then cooled by an air cooler 640.

After completing the above first bending process, the second bending process is performed, and the second bending process is the process for bending regions, each of which having the notch 520 formed thereon, of the both end portions of the molded plastic body 10 as shown in FIG. 9b,.

The second bending process is performed by a pair of rear base plates 660 which are placed below the front the base plate 610 during the first bending process and are elevated by a separate elevation device (not shown) for performing the second bending process after the first bending process.

Each rear base plate 660 is inclined toward a central axis at an angle determined by subtracting 90° from the bending angle of the molded plastic body so that both end portions of the molded plastic body, which are already bent a degree in excess of 90°, can be fixed between a rear operating jig 670 and a rear fixing jig 675.

Even in the second bending process, each end portion of the molded plastic body 10 is fixed between the rear operating jig 670 and the rear fixing jig 675 which are provided on the rear base plate 660, and the bending regions, each of which having the notch 520 formed thereon, of both end portions of the molded plastic body 10 are heated by the air heater 630 for a predetermined time.

Once the heating procedure is completed, the rear operating jig 650 is rotated approximately 95° to 105° by means of the hydraulic cylinder 620 to bend inward the molded plastic body 10. Once the bending procedure is completed, the bending regions placed at both end portions of the molded plastic body 10 are heated by the air heater 630 and are then cooled again by the air cooler 640.

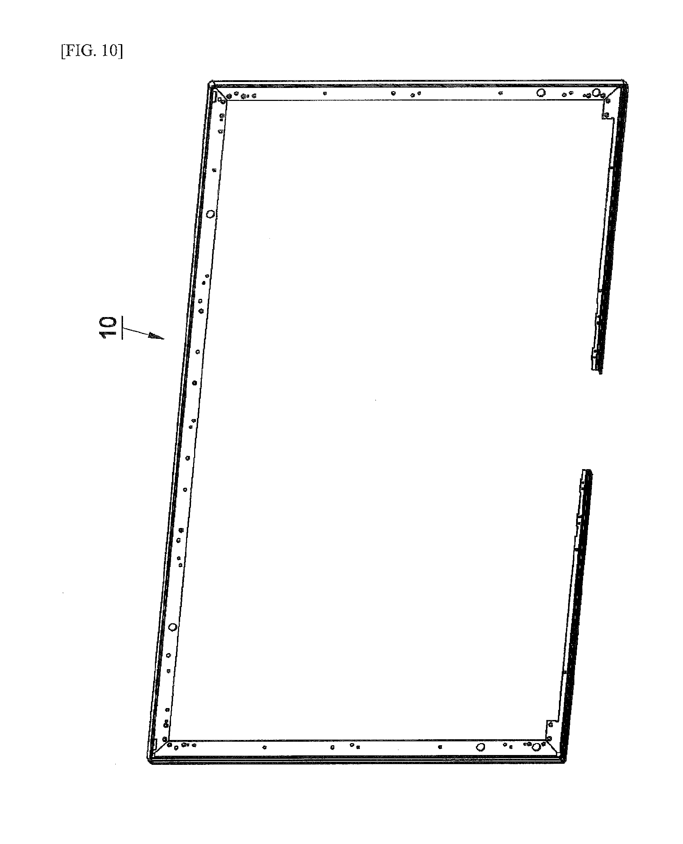

Finally, once the molded plastic body 10 which passed through the first bending process and the second bending process are released from the front and rear operating jigs 650 and 670 and the front and rear fixing jigs 650 and 675 and are escaped from a restraint state, due to a spring back phenomenon, the bending region is unfolded certain angles in the direction opposite to the bending direction, and the rectangular shaped intermediate cabinet of the display as shown in FIG. 10 is completed.

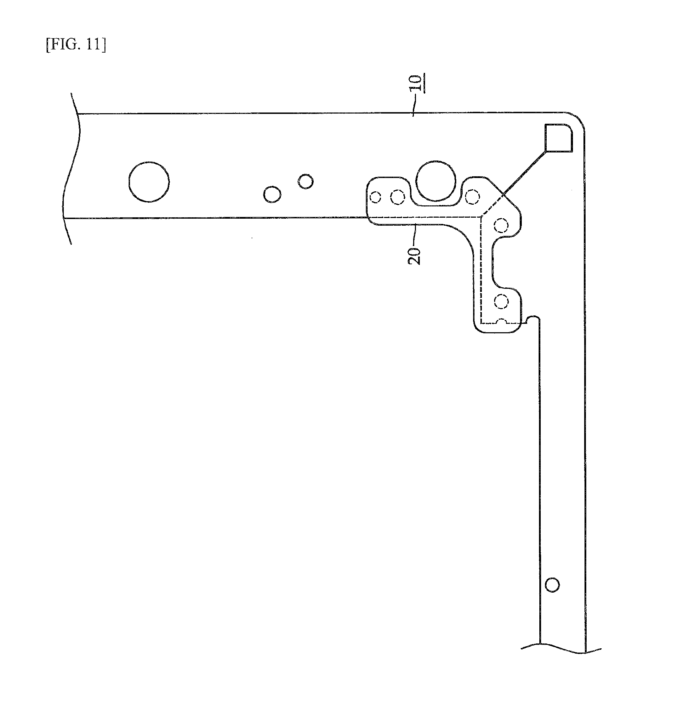

In the intermediate cabinet of the display shown in FIG. 10, since an intermediate portion of the lower member is opened, the bent portion can be easily unfolded and the rectangular shape cannot be maintained so that a LCD panel could not received and fixed in the intermediate cabinet. As shown in FIG. 11, therefore, a corner reinforcing member 20 is fixed to each corner of the rear surface of the intermediate cabinet of the display through a fixing means such as a screw to prevent the bending portion from being unfolded.

In the method for manufacturing the intermediate cabinet of the display as illustrated above, since the intermediate cabinet is produced by an extrusion-molding process, a thickness and width of the intermediate cabinet of the display can become thin so that it is possible to reduce a weight and a thickness of the display.

In addition, since the long-bar shaped molded plastic body formed by the extrusion-molding process is bent to form the intermediate cabinet of the display, although a dimension of the display is variously modified, unlike a method employing an injection-molding process, there is no need to separately manufacture a mould having a dimension corresponding to a dimension of the display, and the intermediate cabinet of the display which fits in a dimension of the display can be manufactured by merely bending the molded plastic body to significantly reduce a production time and cost.

Furthermore, since the film is attached on the surface of the molded plastic body which is extrusion-molded, to realize a color of the intermediate cabinet of the display, it is possible to manufacture the intermediate cabinet of the display, which has a luxury color such as a metallic surface having various colors.

The technical spirit of the present invention is concretely described with reference to the preferred embodiment as described above. However, it should be noted that the above embodiment is provided for merely illustrating the present invention and the present invention is not limited thereto.

In addition, one ordinary skilled in the art to which the present invention pertains can understand that various modified embodiments can be obtained within a technical scope of the present invention.

## Claims

1. A method for manufacturing an intermediate cabinet of a display, comprising a molded plastic body extruding process, a film laminating and sizing process, a cooling process, a drawing process, a shearing process and a heat-bending process.

2. The method for manufacturing an intermediate cabinet of a display of claim 1, wherein the molded plastic body extruding process comprises causing raw plastic to enter a heating cylinder to be heated by a heating heater, melted plastic to be conveyed by a rotating screw and molted plastic body having a predetermined cross-sectional shape to be extruded through a first mould.

3. The method for manufacturing an intermediate cabinet of a display of claim 1, wherein the film laminating and sizing process comprises laminating a PET film supplied from a film supplying unit on the molded plastic body extruded in the molded plastic body extruding process and causing the molded plastic body to have a final cross-sectional shape.

4. The method for manufacturing an intermediate cabinet of a display of claim 1, wherein the cooling process comprises cooling the molded plastic body, which has the film laminated thereon in the film laminating and sizing process and the final cross-sectional shape, with cooling water.

5. The method for manufacturing an intermediate cabinet of a display of claim 1, wherein the drawing process comprises drawing the molded plastic body, which is cooled in the cooling process, by means of a rotating roller.

6. The method for manufacturing an intermediate cabinet of a display of claim 1, wherein the shearing process comprises cutting the molded plastic body passing through the cooling process into a predetermined length and forming a screw hole, a notch and both end cutting portions having a predetermined size.

7. The method for manufacturing an intermediate cabinet of a display of claim 1, wherein and the heat-bending process comprises heating the molded plastic body passing through the shearing process with an air heater and bending it to allow the molded plastic body to have a general rectangular shape.
